# EUROPÄISCHE PATENTSCHRIFT

(11) **EP 0 561 174 B1**
(45) Veröffentlichungstag und Bekanntmachung des Hinweises auf die Patenterteilung: **07.06.1995**
(21) Anmeldenummer: 93102640.5
(22) Anmeldetag: 19.02.1993
(51) Int. Cl.: F02G 5/02, F02G 5/04

(54) **Einrichtung mit Verbrennungsmotor zum Erzeugen elektrischer Energie und zum Ausnutzen von Abwärme, insbesondere für eine Kalkstein-Mahlanlage**
Device with internal combustion engine for producing electricity and for utilisation of waste heat, particularly for an calcareous rock grinding
Machine à moteur à combustion interne pour la production d'énergie électrique et pour l'utilisation de la chaleur perdue, en particulier pour une installation de broyage du calcaire

(30) Priorität: 20.02.1992 DE 4205077
(43) Veröffentlichungstag der Anmeldung: 22.09.1993
(73) Patentinhaber: Hutter, Adolf, D-73450 Neresheim (DE)
(72) Erfinder: Hutter, Adolf, D-73450 Neresheim (DE)
(74) Vertreter: Weitzel, Wolfgang, Dr.-Ing.

(56) Entgegenhaltungen:
- DE-A- 3 025 052
- FR-A- 367 403
- FR-A- 2 087 074
- FR-A- 2 406 104
- GB-A- 804 322
- PATENT ABSTRACTS OF JAPAN vol. 012, no. 145 (M-693) 6. Mai 1988 & JP-A-62 266 354 (TOYO MACH KK) 19. November 1987

## Beschreibung

Die Erfindung betrifft eine Einrichtung zum Erzeugen elektrischer Energie und zum Ausnutzen von Abwärme, insbesondere für eine Kalkstein-Mahlanlage.

Eine Einrichtung gemaß dem Oberbegriff von Anspruch 1 ist aus DE 30 25 052 A1 bekanntgeworden. Die bekannte Einrichtung dient der Erzeugung von Wärmeenergie zu Heizzwecken unter Verwendung eines Verbrennungsmotors. Dabei ist der Generator ebenfalls von einem Verbrennungsmotor angetrieben. Der Motor hat ein wasserbetriebenes Kühlsystem. Der Aufpuff des Verbrennungsmotors sowie der Wärmeinhalt des Kühlsystemes sind zu einer gemeinsamen Auspuff-Heißluft-Leitung zusammengeschaltet. In der Abgas-Heißluft-Leitung ist eine elektrische Heizeinrichtung vorgesehen, die vom Strom des Generators gespeist wird.

Wird eine Einrichtung gemäß dem Oberbegriff von Anspruch 1 im Rahmen einer verfahrenstechnischen Anlage eingesetzt, beispielsweise für eine Kalkstein-Mahlanlage, so müssen die von der Einrichtung erzeugte elektrische Energie einerseits und die ebenfalls von der Einrichtung erzeugte Wärmemenge andererseits aufeinander abgestimmt werden. Solche Anlagen benötigen nämlich zum einen elektrische Energie zum Betreiben von Aggregaten wie Schottermühlen, Drehöfen, Förderwerken usw. Zum anderen benötigen sie ein heißes Gas, z.B. Heißluft, zum Trocknen des Mahlgutes. Die Versorgung der Anlage mit diesen beiden Gütern - elektrischer Energie und Heißgas - läßt sich bei gewissen Betriebszuständen der Anlage allein mit einer Einrichtung gemäß dem Oberbegriff von Anspruch 1 durchführen. Dabei wird vom Generator die zum Betreiben der einzelnen Aggregate der Anlage notwendige elektrische Energie abgenommen, während die Heißluft, die aus dem Kühlsystem des Verbrennungsmotors austritt, zum Trocknen des Mahlgutes ausgenutzt wird.

Der Bedarf der Anlage an elektrischer Energie ist jedoch nicht immer konstant. Dies ist dadurch bedingt, daß einzelne Teile der Anlage aus betriebsbedingten Gründen gelegentlich abgeschaltet werden. Gleichwohl kann der Bedarf an Heißluft zum Trocknen durchaus konstant sein. Wird aber während einer bestimmten Zeitspanne weniger elektrische Energie verbraucht, als der installierten elektrischen Leistung entspricht, so wird der Verbrennungsmotor entsprechend zurückgefahren, was im allgemeinen durch die bei Verbrennungsmotoren übliche Füllungsregelung geschieht. Wenn aber der Verbrennungsmotor weniger Leistung abgeben muß, so wird er auch nicht so heiß, so daß er in geringerem Maße als bei Normalbetrieb gekühlt werden muß. Das Motor-Kühlsystem braucht somit entweder mit weniger Frischluft beschickt zu werden, so daß auch die Menge der abgegebenen Heißluft geringer als bei Normalbetrieb ist, oder aber man beschickt das Motor-Kühlsystem mit derselben Frischluftmenge, so daß man zwar die normale Heißluftmenge erhält, die jedoch eine geringere Temperatur als normal hat. Da der Heißluftbedarf der Anlage - nach Menge und Temperatur - ungeachtet des geringeren Bedarfes an elektrischer Energie konstant ist, bedeutet dies, daß auf andere Weise zusätzliche Heißluft erzeugt werden muß. Dies erfordert in jedem Falle einen apparativen Aufwand, z.B. in Gestalt eines besonderen Heißlufterzeugers.

Der Erfindung liegt die Aufgabe zugrunde, eine Einrichtung gemäß dem Oberbegriff von Anspruch 1 derart zu gestalten, daß ohne großen zusätzlichen apparativen Aufwand bei jedem Betriebszustand, d.h. ungeachtet des aktuellen Energiebedarfs der Anlage, das für das Betreiben der Anlage notwendige heiße Gas bereitgestellt wird, und zwar bezüglich seiner Menge als auch bezüglich seiner Temperatur.

Diese Aufgabe wird durch die kennzeichnenden Merkmale von Anspruch 1 gelöst. Demgemäß geht man wie folgt vor:
(a) der Auspuff des Verbrennungsmotors und der Heißluftauslaß des Kühlsystems des Verbrennungsmotors werden in einer gemeinsamen Abgas-aufgeheizten Kühlluft-Leitung zusammengeschaltet;
(b) in der Abgas-aufgeheizten Kühlluft-Leitung ist eine elektrische Heizeinrichtung vorgesehen, die mit Strom des Generators gespeist wird;
(c) es ist ein Temperatursensor vorgesehen, der die Temperatur des Abgas-aufgeheizten Kühlluft-Gemisches an einer bestimmten Stelle in der Abgas-aufgeheizten Kühlluft-Leitung mißt;
(d) es ist ein Temperaturregler vorgesehen, der die Temperatur des Abgas-aufgeheizten Kühlluft-Gemisches regelt und hierzu die Arbeitsweise des Verbrennungsmotors beeinflußt.

Durch diese ganz einfachen, investitionssparenden Maßnahmen läßt sich die Anlage wie folgt betreiben:

Wird in der Anlage ein Einzelaggregat abgeschaltet oder zurückgefahren, so daß weniger elektrische Energie benötigt wird, so wird der Verbrennungsmotor - zweckmäßigerweise ein Dieselmotor - so wie seither entsprechend zurückgefahren. Gleichwohl wird aber das Kühlluft-System dieses Motors im wesentlichen mit derselben Frischluftmenge beschickt, so daß auch dieselbe Menge an Heißluft aus dem Kühlluft-System austritt. Das vereinigte Abgas-aufgeheizte Kühlluft-Gemisch wird sodann durch die elektrische Heizeinrichtung auf eine höhere Temperatur angehoben. Die hierfür notwendige elektrische Energie wird dem Generator entnommen. Mit dessen Entnahme steigt aber auch - bewirkt durch den Regler - die Leistung des Verbrennungsmotors, was ein Anstieg der Temperatur in der aus dem Kühlluft-System austretenden Heißluft zufolge hat. Gleichzeitig steigen aber auch Temperatur und Menge des Abgases des Verbrennungsmotors an. Durch diesen Kombinationseffekt erreicht das Abgas-aufgeheizte Kühlluft-Gemisch sehr schnell den notwendigen Temperaturwert, so daß die volle Trocknungskapazität zur Verfügung steht.

Die Erfindung ist anhand der Zeichnung näher erläutert. Darin ist im einzelnen folgendes dargestellt:

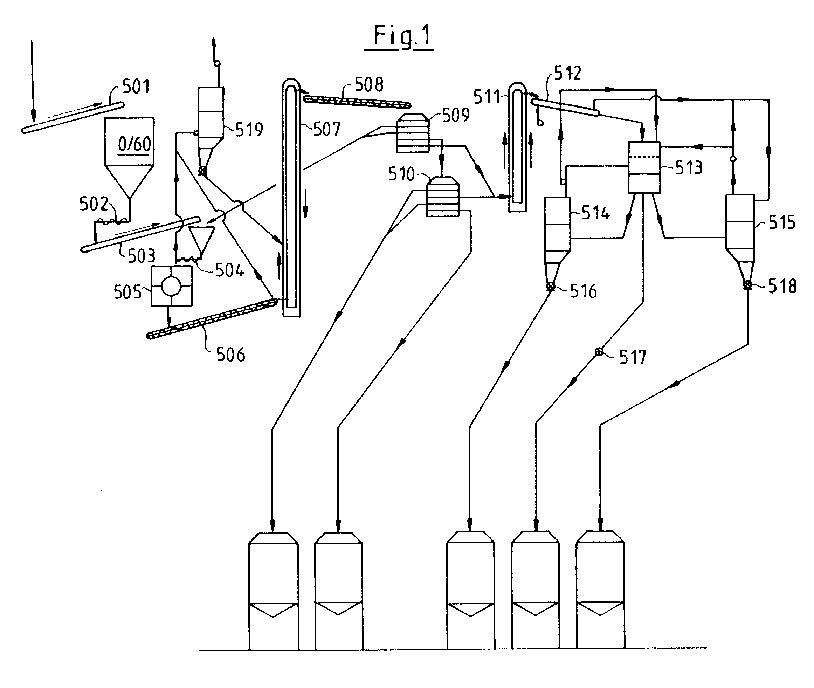

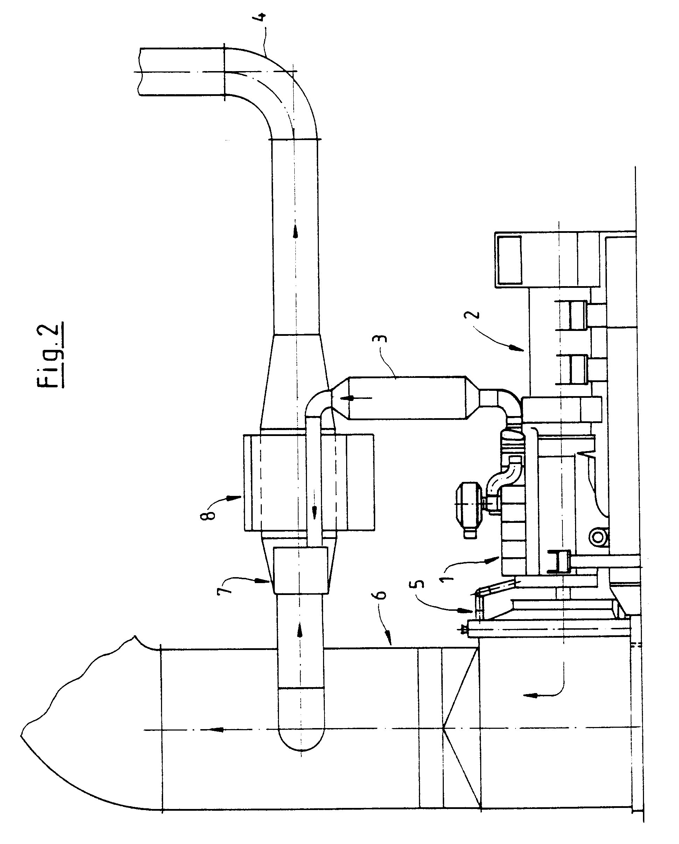

Abbildung 1 zeigt in einer schematischen Ansicht eine Mahlanlage für Kalkstein. Abbildung 2 zeigt eine Ausführungsform der erfindungsgemäßen Einrichtung.

In Abbildung 1 ist der Produktionsprozeß schematisch dargestellt. Zunächst wird Material von einer Körnung von weniger als 80 mm auf ein Förderband 501 aufgegeben. Es dient als Ausgangsmaterial zur Herstellung von Zuschlagstoffen für die chemische und Bauindustrie. Es gelangt sodann in einen Vorratssilo 0/60, von dort zu einer Rinne 502, auf ein Förderband 503 und schließlich in eine Prallmühle 505. Dort wird es auf eine Körnung von unter 2 mm mittels einer Förderschnecke 506 auf ein Becherwerk 507 aufgegeben, gelangt über eine weitere Förderschnecke 508 auf ein Sieb 509 und wird dort getrennt in Gut mit einer Körnung von kleiner als 1 mm und größer als 1 mm, wobei das Material mit der größeren Körnung zur weiteren Zerkleinerung in die Prallmühle 505 wieder zurückgeführt wird. Das so gewonnene Ausgangsgut gelangt zu einer Siebmaschine 510, wo es wiederum in verschiedene Körnungen zerlegt wird. Weitere Aggregate sind ein Becherwerk 511, eine Fließrinne 512, ein Sichter 513. Das Sichter-Feingut wird über einen Ventilator sowie über Rohre durch ein Filter 514 hindurchgesaugt, von der Luft abgetrennt und fällt durch eine Zellenradschleuse 516 in das hierfür bestimmte Silo. Man erkennt ferner ein Filter 515, eine weitere Zellenradschleuse 518 sowie - in der Zeichnung unten - eine Anzahl von fünf Silos.

In Abbildung 2 erkennt man einen Dieselmotor 1, einen von diesem angetriebenen Generator 2, einen Schalldämpfer 3 des Dieselmotors sowie eine gemeinsame Abgas-Heißluft-Leitung 4. Ferner ist dem Dieselmotor 1 ein mit Luft betriebenes Kühlluft-System 5 zugeordnet. Aus dem Kühlluft-System 5 tritt aufgeheizte Kühlluft aus, die in eine Leitung 6 einmündet. In einem Aggregat 7 findet eine Mischung der heißen Abgase aus dem Schalldämpfer 3 und der aufgeheizte Kühlluft aus dem Kühlluftsystem 5 statt. Das Abgas-aufgeheizte Kühlluft-Gemisch wird in einer elektrischen Heizeinrichtung 8 gegebenenfalls aufgeheizt. Es gelangt sodann durch die Rohrleitung 4 zur Kalkstein-Aufbereitungsanlage.

## Patentansprüche

1. Einrichtung zum Erzeugen elektrischer Energie und zum Ausnutzen von Abwärme, insbesondere für eine Aufbereitungsanlage für Kalkstein, mit den folgenden Merkmalen:
1.1 einem Verbrennungsmotor (1) mit einem Auspuff (3);
1.2 einem vom Verbrennungsmotor (1) angetriebenen Generator (2);
1.3 einem Motor-Kühlsystem (5) mit einem Einlaß und einem Auslaß für ein Kühlmittel;
1.4 mit einer in der Abgasleitung vorgesehenen, vom Strom des Generators (2) gespeisten elektrischen Heizeinrichtung (8);
1.5 wobei die Abwärme des Abgases und des Kühlmittels genutzt werden;
gekennzeichnet durch die folgenden Merkmale:
1.6 als Kühlmittel dient Luft;
1.7 es ist eine Mischeinrichtung (7) zum Herstellen eines Gemisches aus heißem Abgas und vom Motor aufgeheizter Kühlluft vorgesehen, wobei das Gemisch in der elektrischen Heizeinrichtung (8) gegebenfalls aufgeheizt wird;
1.8 es ist ein Temperatursensor vorgesehen, der die Temperatur des Abgas-aufgeheizten Kühlluft-Gemisches in der Abgas-aufgeheizten Kühlluft-Leitung (4) mißt;
1.9 es ist ein Regler vorgesehen, der die Arbeitsweise des Verbrennungsmotors (1) in Abhängigkeit von der gemessenen Temperatur des Abgas-aufgeheizten Kühlluft-Gemisches regelt.

## Claims

1. Device for generating electrical energy and for utilising waste heat, in particular for a limestone treatment plant with the following features:
1.1 a combustion motor (1) with an exhaust (3);
1.2 a generator (2) driven by the combustion motor (1);
1.3 a motor cooling system (5) with an inlet and an outlet for a cooling agent;
1.4 an electrical heating device (8) in the exhaust gas pipe powered by electricity from the generator (2);
1.5 whereby the waste heat from the exhaust gas and the cooling agent is used;
characterised by the following features:
1.6 air acts as the cooling agent;
1.7 a mixing device (7) for producing a mixture of a hot exhaust gas and cooling air heated by the motor, whereby the mixture is heated in the electrical heating device (8) if necessary;
1.8 a temperature sensor is provided which measures the temperature of the mixture of cooling air heated by exhaust gas in the pipe (4) for cooling air heated by exhaust gas;
1.9 a controller is provided which regulates the mode of operation of the combustion motor (1) in dependency on the temperature of the mixture of cooling air heated by exhaust gas measured.

## Revendications

1. Installation pour fournir de l'énergie électrique et utiliser la chaleur dégagée notamment pour une installation de préparation de chaux ayant les caractéristiques suivantes :
1.1 un moteur à combustion interne (1) avec un échappement (3),
1.2 un générateur (2) entraîné par le moteur à combustion (1),
1.3 un système de refroidissement du moteur (5) avec une entrée et une sortie de fluide de refroidissement,
1.4 une installation de chauffage électrique (8) prévue dans la conduite des gaz d'échappement et qui est alimentée par le courant du générateur (2),
1.5 selon laquelle on utilise la chaleur dégagée par le gaz d'échappement et l'agent de refroidissement,
caractérisée par les caractéristiques suivantes :
1.6 le fluide de refroidissement est de l'air,
1.7 il est prévu une installation de mélange (7) pour former un mélange de gaz chauds et d'air de refroidissement réchauffé par le moteur (1),
1.8 un capteur de température mesure la température du mélange de gaz d'échappement et d'air de refroidissement réchauffé dans la conduite du mélange gaz d'échappement-air de refroidissement réchauffé (4),
1.9 il est prévu un moyen de régulation qui régule le fonctionnement du moteur à combustion interne (1) suivant la température mesurée du mélange d'air de refroidissement réchauffé et de gaz d'échappement.
